# FASCICULE DE BREVET EUROPEEN

(11) **EP 2 774 257 B1**
(45) Date de publication et mention de la délivrance du brevet: **21.03.2018**
(21) Numéro de dépôt: 12794416.3
(22) Date de dépôt: 30.10.2012
(51) Int. Cl.: H02M 7/797, H02P 6/14, H02M 7/00

(54) **MODULE DE PUISSANCE ET DISPOSITIF ÉLECTRIQUE POUR L'ALIMENTATION ET LA CHARGE COMBINÉES RESPECTIVEMENT D'UN ACCUMULATEUR ET D'UN MOTEUR**
LEISTUNGSMODUL UND ELEKTRISCHE VORRICHTUNG FÜR KOMBINIERTEN ANTRIEB UND AUFLADUNG EINES AKKUMULATORS BZW. MOTORS
POWER MODULE AND ELECTRIC DEVICE FOR THE COMBINED POWERING AND CHARGING OF AN ACCUMULATOR AND A MOTOR RESPECTIVELY

(30) Priorité: 02.11.2011 FR 1159907
(43) Date de publication de la demande: 10.09.2014
(73) Titulaire: Valeo Systèmes de Contrôle Moteur, 95800 Cergy (FR)
(72) Inventeur: BOUCHEZ, Boris, F-95800 Cergy (FR); DE SOUSA, Luis, F-95670 Eragny Sur Oise (FR); SILVESTRE, Bénédicte, F-78740 Vaux sur Seine (FR)
(74) Mandataire: Argyma
(86) Numéro de dépôt international: PCT/FR2012/052515
(87) Numéro de publication internationale: WO 2013/064780

(56) Documents cités:
- DE-A1-102009 045 279
- JP-A- 2008 118 815
- US-A1- 2008 158 824
- US-A1- 2009 059 637
- US-A1- 2011 058 391
- US-A1- 2011 221 268
- US-B1- 6 496 393

## Description

La présente invention concerne un module de puissance pour la conversion d'un courant électrique circulant entre un accumulateur et un moteur à courant alternatif. Elle concerne également un onduleur, un convertisseur et un dispositif électrique utilisant un tel module ainsi qu'un procédé d'alimentation et de charge mettant en oeuvre un tel dispositif.

L'invention trouvera avantageusement application dans le domaine des automobiles électriques dans lesquelles les batteries peuvent alimenter le moteur via un onduleur et être rechargées lorsque l'automobile est à l'arrêt. Toutefois, bien que particulièrement prévus pour une telle application, le module conforme à l'invention pourra être utilisé dans d'autres domaines.

Classiquement, un véhicule électrique est équipé de batteries haute tension délivrant un courant continu à un onduleur qui transforme ce courant continu en un courant alternatif permettant d'alimenter un moteur électrique, ce dernier assurant l'entraînement du véhicule.

De manière à assurer la recharge de ces batteries haute tension, il est connu d'équiper le véhicule d'un dispositif de charge embarqué essentiellement muni d'un convertisseur alternatif-continu permettant de redresser la puissance alternative du réseau électrique pour charger les batteries. En outre, le dispositif peut comprendre un convertisseur continu-continu, dit DC/DC, qui assure l'adaptation du niveau de tension du réseau à celui des batteries.

Les composants électroniques de la chaîne d'alimentation, d'une part, et de la chaîne de charge, d'autre part, sont coûteux. Par ailleurs, l'alimentation du moteur et la charge des batteries s'effectuent à des phases différentes. Aussi il a été proposé, dans les documents de brevet EP 0 603 778 et WO 97/09009, de réutiliser une partie du moteur et des composants servant à son alimentation pour réaliser le dispositif de charge des batteries.

A cet effet, l'onduleur et le convertisseur DC/DC pourront être prévus réversibles. Le dispositif de charge des batteries pourra en particulier utiliser l'onduleur pour former un convertisseur alternatif-continu ainsi que les bobinages du moteur pour former des inductances associées.

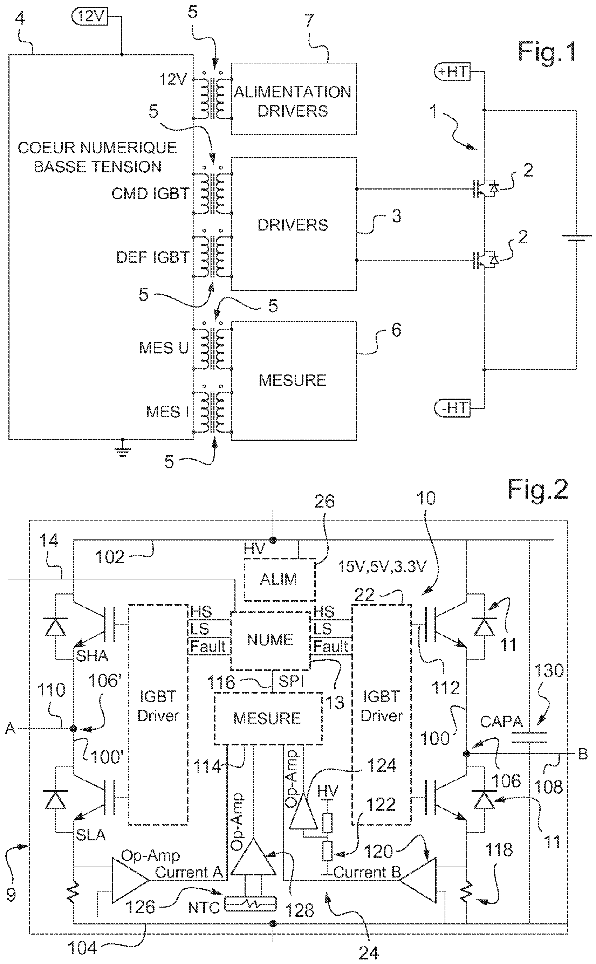

On a représenté à la figure 1 le principe de fonctionnement des convertisseurs de l'état de l'art. Ils utilisent un ou plusieurs bras de commande 1 munis de commutateurs 2 dont l'ouverture/fermeture permet, de façon connue, d'opérer une conversion de courant.

L'ouverture/fermeture des commutateurs est obtenue par une unité de pilotage 3 générant un courant de fermeture/ouverture desdits commutateurs. L'unité de pilotage 3 échange des informations avec une unité de commande 4 transmettant à l'unité de pilotage 3 des ordres déterminant l'ouverture/fermeture des commutateurs 2.

Les commutateurs 2 et l'unité de pilotage 3 fonctionnent à haute tension pour pouvoir transformer le courant soit en courant continu, soit en courant alternatif, suivant le mode de fonctionnement du dispositif. L'unité de commande 4, quant à elle, commande en basse tension (de l'ordre de 12 Volts). Aussi, pour découpler le circuit haute tension (unité de pilotage 3 et commutateurs 2) du circuit basse tension (unité de commande 4), il est connu de découpler individuellement chaque connexion haute tension - basse tension, au moyen de découpleurs 5, par exemple du type opto-coupleur et/ou transformateur.

De plus, la norme sur les véhicules électriques impose une tenue à l'isolation entre la batterie et la carrosserie, afin d'éviter l'électrocution de toute personne susceptible de rentrer en contact avec la carrosserie. Pour cela, la batterie HT est flottante, aucun de ses potentiels n'étant relié au châssis. Il est prévu des câbles isolants pour chaque liaison entre les composants haute tension et l'unité de commande 4, ce qui permet de désolidariser la batterie du châssis.

D'autres composants fonctionnant sous haute tension sont également employés tels que des unités de mesure 6 ou des unités d'alimentation 7, notamment d'alimentation de l'unité de pilotage 3. Les unités de mesure échangent des informations avec l'unité de commande 4. Les unités d'alimentation utilisent le circuit basse tension pour la fourniture du courant. Ainsi, des moyens de découplage 5 sont aussi prévus entre ces composants et l'unité de commande 4.

Pour toutes ces raisons, les dispositifs électriques selon l'art antérieur présentent des inconvénients à la fois en termes de connectique et de prix et de fiabilité, cette dernière étant liée au nombre de composants utilisés.

Par ailleurs, ils présentent un inconvénient majeur en termes de fiabilité, en particulier lorsqu'une même unité de commande 4 sert à plusieurs bras de commande 1. En effet, si une défaillance intervient, il est n'est pas aujourd'hui prévu de solutions pour déterminer son origine et il s'avère nécessaire de remplacer l'ensemble du convertisseur DC/DC et/ou de l'onduleur.

L'invention a pour but de remédier à ces inconvénients, et propose à cet effet un module de puissance pour la conversion d'un courant électrique circulant entre un accumulateur et un moteur à courant alternatif, ledit module comprenant des moyens de commutation, aptes à être commandés pour autoriser l'alimentation moteur et/ou la charge de l'accumulateur, et une unité de commande intrinsèque, reliée auxdits moyens de commutation et apte à délivrer des signaux d'ouverture et/ou de fermeture auxdits moyens de commutation, ladite unité de commande intrinsèque étant en outre apte à échanger des données avec une unité de commande distante, cet échange de données mettant en oeuvre au moins une barrière de potentiel. L'échange de données se fait notamment à travers au moins une barrière de potentiel.

L'alimentation du moteur peut être effectuée selon différents modes d'alimentation et les moyens de commutation peuvent être commandés pour permettre ces différents modes d'alimentation du moteur.

Grâce à l'invention, on déporte des fonctions intelligentes, autrefois assurées par une unité de commande principale (l'unité de commande 4 sur la figure 1), à l'intérieur d'un module de puissance individuel, qui comprend ainsi sa propre unité de commande et ses propres fonctions logiques associées. Cette unité de commande intrinsèque est, d'une part, reliée aux moyens de commutation du module de puissance pour leur fournir un signal de commande et, d'autre part, communique avec une unité de commande distante pour recevoir et transmettre des données.

Les échanges de signaux entre les moyens de commutation et l'unité de commande intrinsèque pourront avoir lieu dans un environnement haute tension et ne pas nécessiter de barrière de potentiel, seule la liaison avec l'unité de commande distante nécessitant encore une telle barrière. Grâce à l'invention, on limite donc le découplage fourni par cette barrière de potentiel à des supports qui transportent uniquement des données et on limite le nombre de composants de découplage à utiliser.

Autrement dit, les modules de puissance ainsi constitués peuvent fonctionner de manière indépendante et réaliser eux-mêmes les commandes haute tension, à partir des données transmises par l'unité de commande distante.

La barrière de potentiel peut être obtenue par isolation galvanique, par exemple en utilisant pour le découplage un transformateur et/ou un opto-coupleur.

On pourra en outre employer un bus de communication permettant, par exemple, de multiplexer les signaux de données issus de plusieurs modules de puissance. Les unités de commande intrinsèques pourront alors communiquer en haute tension, module par module, avec leurs moyens de commutation, et sous la forme de données avec l'unité de commande distante. La barrière de potentiel peut être disposée au niveau du bus de communication et l'échange de données peut impliquer un passage à travers la barrière de potentiel de ce bus.

L'unité de commande distante ne fait avantageusement pas partie du module de puissance.

Un autre avantage de l'invention est que le module de puissance peut être aussi bien utilisé au sein de l'onduleur ou du convertisseur DC/DC. En effet, il suffit pour cela de paramétrer le module de puissance correspondant, par exemple via un port de communication afin de programmer son unité de commande intrinsèque et de le faire fonctionner soit en tant que composant d'un onduleur, soit en tant que composant d'un convertisseur DC/DC. Il est ainsi rendu possible de fabriquer de tels modules de façon industrielle, la spécialisation pouvant être programmée postérieurement.

Selon différents modes de réalisation, qui pourront être pris ensemble ou séparément :
- les moyens de commutation comprennent au moins un bras formé de deux commutateurs, montés en série, commandés à partir de ladite unité de commande intrinsèque,
- les moyens de commutation comprennent des moyens de pilotage des commutateurs reliés, d'une part, à ladite unité de commande intrinsèque et, d'autre part aux commutateurs, lesdits moyens de pilotage étant aptes à fournir un courant de fermeture et/ou d'ouverture des commutateurs à partir des signaux d'ouverture et/ou de fermeture de ladite unité de commande intrinsèque,
- ledit module comprend en outre des moyens de mesure reliés à ladite unité de commande intrinsèque,
- ledit module comprend en outre des moyens d'alimentation, reliés au moins à ladite unité de commande intrinsèque et/ou auxdits moyens de commutation, ainsi qu'éventuellement auxdits moyens de mesure,
- les moyens de commutation sont agencés pour former une structure de pont en H, apte à être reliée à une phase du moteur, les moyens de commutation comprenant alors deux bras comprenant chacun des commutateurs entre lesquels une borne de la phase du moteur est reliée,
- le module de puissance est muni d'au moins une capacité de découplage agencée pour lisser la tension au niveau du pont en H,
- ledit module comprend un bus de communication de données, relié à ladite unité de commande intrinsèque et apte à échanger des données avec ladite unité de commande distante, avec barrière de potentiel sur le bus,
- le module comprend des moyens d'isolation galvanique sur ledit bus de communication.

Ainsi, selon un mode de réalisation particulier, chacun des modules est muni de moyens de mesure de courant, de tension et de température, ainsi que d'une capacité et d'une alimentation haute tension non isolée, ce qui complète l'autonomie desdits modules, avec un nombre réduit de connexions.

Les interfaces du module peuvent être limitées à:
- deux interfaces de puissance pour alimenter le module en haute tension,
- deux interfaces de puissance délivrant le courant sortant du pont en H,
- une interface de commande pour le bus de communication.

L'invention concerne aussi un convertisseur de tension comprenant :
- au moins un module de puissance tel que décrit ci-dessus, et
- une unité de commande distante configurée pour échanger des données avec l'unité de commande intrinsèque du module à travers une barrière de potentiel.

Le convertisseur peut comprendre une pluralité de modules de puissance et une seule unité de commande distante configurée pour échanger des données avec chaque unité de commande intrinsèque. L'échange de données peut ne se faire qu'à travers une seule barrière de potentiel,

Le convertisseur de tension peut être l'onduleur ou le convertisseur DC/DC mentionné ci-dessous.

L'invention concerne aussi un onduleur pour l'alimentation et la charge combinées respectivement d'un accumulateur et d'un moteur à courant alternatif, l'onduleur comprenant au moins un module de puissance tel que décrit plus haut.

Il pourra s'agir d'un onduleur pour moteur polyphasé, l'onduleur étant alors muni de modules de puissance en nombre égal au nombre de phases dudit moteur, chacun desdits modules de puissance étant relié à l'une desdites phases dudit moteur.

L'invention concerne aussi un convertisseur DC/DC pour l'alimentation et la charge combinées respectivement d'un accumulateur et d'un moteur à courant alternatif.

Le convertisseur DC/DC peut ou non être utilisé en combinaison avec l'onduleur ci-dessus. En cas de combinaison, ledit convertisseur DC/DC peut être agencé pour adapter le niveau de tension entre l'accumulateur et un onduleur. Il est muni pour cela d'au moins un module de puissance tel que décrit plus haut.

L'invention concerne aussi un dispositif électrique combiné d'alimentation et de charge, comportant un moteur à courant alternatif, un accumulateur, un onduleur muni d'au moins un module de puissance tel que décrit ci-dessus, ledit dispositif comportant également une unité de commande distante, apte à échanger des données avec l'unité de commande intrinsèque du ou des modules de puissance, par exemple par un bus de communication. L'unité de commande distante peut ainsi communiquer avec chaque unité de commande intrinsèque.

Ce dispositif électrique combiné d'alimentation et de charge bénéficie des avantages déjà évoqués fournis par les modules de puissance selon l'invention. En outre, grâce à ce dispositif, en présence d'un défaut, il est possible de déterminer lequel des ports du bus de communication présente le défaut, et donc d'en déduire le module de puissance effectivement défectueux. Seul ce module de puissance peut alors être remplacé, ce qui limite les coûts de service après-vente.

Un autre avantage de l'invention est qu'il est possible de connecter une pluralité de modules de puissance selon l'invention à un même bus de télécommunication, qui communique avec l'unité de commande par l'intermédiaire d'un nombre limité de liaisons. De plus, au lieu de découpler individuellement chacune des connexions, le découplage réalisé par le bus de communication se fait de manière globale et multiplexée. De cette manière, le nombre de connectiques et d'isolateurs est réduit, de même que le prix du dispositif électrique résultant.

Un autre avantage de l'invention est que l'on peut réaliser un dispositif électrique combiné d'alimentation et de charge sur-mesure, en choisissant par exemple le nombre de modules de puissance selon l'invention que l'on souhaite utiliser pour former l'onduleur et/ou le convertisseur DC/DC.

De préférence, ce dispositif électrique comporte également un convertisseur DC/DC disposé entre l'accumulateur et l'onduleur, de manière à adapter les niveaux de tension de l'accumulateur et de l'onduleur. Ce convertisseur peut être lui aussi muni de modules de puissance selon l'invention, c'est-à-dire de modules munis chacun d'une unité de commande intrinsèque, l'unité de commande distante du dispositif et l'unité de commande intrinsèque de ces modules de puissance étant reliées à un même bus de communication, de manière que l'unité de commande distante commande au moins une partie des moyens de commutation de ces modules de puissance par l'intermédiaire de leur unité de commande intrinsèque.

Une seule unité de commande distante peut ainsi échanger des données avec chaque unité de commande intrinsèque du dispositif, que cette dernière appartienne à un module de puissance de l'onduleur ou à un module de puissance du convertisseur DC/DC.

Afin d'assurer la régulation thermique du dispositif, il pourra être prévu qu'il soit intégré dans un boîtier dont au moins une surface est en contact avec un échangeur à eau de manière à permettre le refroidissement de ladite au moins une surface. Cette surface de refroidissement peut comprendre par ailleurs une pluralité de picots agencés pour augmenter la dimension de la surface d'échange.

Bien sûr, l'invention trouve aussi son intérêt dans des dispositifs électriques assurant seulement l'alimentation du moteur depuis l'accumulateur ou seulement la charge de l'accumulateur depuis le moteur et les onduleurs et/ou convertisseur DC/DC conformes à l'invention ne sont pas nécessairement réversibles.

L'invention concerne également un procédé combiné d'alimentation et de charge pour la mise en oeuvre du dispositif présenté ci-dessus, ce procédé comportant une étape de commande des moyens de commutation d'au moins l'un des modules de puissance permettant de passer d'un mode d'alimentation du moteur à un mode de charge de l'accumulateur et inversement.

L'invention concerne également un procédé d'implémentation d'un dispositif combiné d'alimentation et de charge tel que décrit ci-dessus, dans lequel on implémente le dispositif en superposant une pluralité de couches fonctionnelles électroniques, lesdites couches étant telles que :
- une première couche forme l'onduleur,
- une seconde couche forme l'unité de commande distante, et
- une troisième couche forme le convertisseur DC/DC.

Ce procédé peut comporter l'étape selon laquelle on connecte la première couche et la deuxième couche à l'aide d'un premier bus de communication et selon laquelle on connecte la deuxième couche et la troisième couche à l'aide d'un second bus de communication.

L'invention sera mieux comprise à l'aide des dessins annexés sur lesquels :
- la figure 1, déjà commentée, représente schématiquement un dispositif électrique selon l'art antérieur,
- la figure 2 illustre schématiquement un exemple de réalisation d'un module de puissance selon l'invention,
- la figure 3 représente schématiquement un exemple de réalisation du dispositif électrique combiné d'alimentation et de charge conforme à l'invention.

Comme illustré à la figure 2, l'invention concerne tout d'abord un module de puissance 9 pour la conversion d'un courant électrique circulant entre un accumulateur et un moteur à courant alternatif, non représentés à cette figure. Ledit module 9 comprend dans l'exemple décrit:
- des moyens de commutation 10, aptes à être commandés pour autoriser l'alimentation du moteur et/ou la charge de l'accumulateur, et
- une unité de commande intrinsèque 13, reliée auxdits moyens 10 de commutation et apte à délivrer des signaux d'ouverture et/ou de fermeture auxdits moyens de commutation 10, ladite unité de commande intrinsèque 13 étant en outre apte à échanger des données avec une unité de commande distante, non représenté à cette figure, avec barrière de potentiel.

Par « reliée », on entend que l'unité de commande intrinsèque 13 est liée électriquement sans isolation galvanique aux moyens de commutation 10. Il en est plus généralement de même pour les différents composants de l'invention qui sont dits « reliés ».

Ladite unité de commande 13 est de nature numérique. On entend par là qu'elle est apte traiter des données sous format numérique, aussi bien en entrée qu'en sortie. Elle définit ainsi, par exemple, un coeur numérique pour le module 9.

Les moyens 10 de commutation comprennent au moins un bras formé de deux commutateurs 11 commandés à partir de ladite unité de commande intrinsèque 13. Les commutateurs sont reliés en série entre deux conducteurs 102, 104, destinés à être relié aux bornes d'une alimentation, par l'intermédiaire d'un connecteur du module, non représenté. Ici, le module comprend deux bras 100, 100', un premier présentant un premier point milieu 106, prévu entre ses deux commutateurs 11, et un second présentant un second point milieu 106', prévu entres ses deux commutateurs 11. Lesdits points milieu 106, 106' sont reliés à un connecteur du module, non représenté, par des conducteurs 108, 110. Chaque connecteur permet la connexion d'un point milieu 106, 106' à une borne d'une phase d'un moteur, comme expliqué par la suite. Les moyens de commutation 10 sont ainsi agencés pour former une structure de pont en H.

Les moyens 10 de commutation comprennent également des moyens 22 de pilotage des commutateurs 11 reliés, d'une part, à ladite unité de commande intrinsèque 13 et, d'autre part aux commutateurs 11. Lesdits moyens 22 de pilotage sont aptes à fournir un courant de fermeture et/ou d'ouverture des commutateurs 11 à partir des signaux d'ouverture et/ou de fermeture de ladite unité de commande intrinsèque 13.

Ici, les commutateurs 11 sont définis par des transistors, notamment du type IGBT ou MOSFET, et les moyens 22 de pilotage délivrent un courant aux grilles desdits transistors par un conducteur 112, courant qui déterminera leur état passant ou bloqué.

Le module comprend en outre, par exemple, des moyens de mesure 24 reliés à ladite unité de commande intrinsèque 13. Ils comprennent ici une unité de mesure 114, reliée à l'unité de commande intrinsèque 13 par un bus de communication 116. Ils comprennent aussi différents composants permettant, par exemple, des mesures du courant circulant dans les bras 100, 100', des mesures de la tension aux bornes des bras ou des mesures de température.

La mesure de courant s'effectue, par exemple, à l'aide de résistances 118 prévues en série sur les bras 100, 100', la tension aux bornes de la résistance étant convertie par des amplificateurs opérationnels 120 qui délivrent un courant de mesure à l'unité de mesure 114.

La mesure de tension s'effectue, par exemple, à l'aide d'un diviseur de tension 122 associé aux bornes d'entrée d'un amplificateur opérationnel 124 délivrant un courant de mesure à l'unité de mesure 114.

La mesure de température s'effectue, par exemple, à l'aide d'une varistance 126 associée à un amplificateur opérationnel 128 délivrant un courant de mesure à l'unité de mesure 114.

Le module comprend en outre, par exemple, des moyens d'alimentation 26, reliés au moins à ladite unité de commande intrinsèque 13 et/ou auxdits moyens de commutation 10 ainsi que, éventuellement aux moyens de mesure pour leur alimentation. Lesdits moyens d'alimentation 26 sont non-isolés et reliés, par exemple, à l'alimentation haute-tension, ici par le conducteur 102 alimentant le pont en H.

Le module conforme à l'invention pourra aussi être muni d'au moins une capacité de découplage 130 agencée pour protéger les moyens de commutation 10. Elle est ici raccordée aux conducteurs 102, 104 alimentant le pont en H.

Le module pourra encore comprendre un bus de communication de données 14, relié à ladite unité de commande intrinsèque 13 et apte à échanger des données avec ladite unité de commande distante. Une barrière de potentiel, non représenté à cette figure est prévue sur le bus. Il pourra s'agir de moyens d'isolation galvanique, tels qu'un transformateur et/ou un opto-coupleur.

Autrement dit, dans l'exemple illustré, les interfaces du module 9 se limitent à:
- deux interfaces de puissance, reliées aux conducteurs 102, 104, pour alimenter le module en haute tension,
- deux interfaces de puissance, reliées aux conducteurs 108, 110 délivrant le courant sortant du pont en H,
- une interface de commande pour le bus de communication 14.

Ladite unité de commande intrinsèque 13 assure, par exemple, les fonctions suivantes :
- application des ordres reçus de l'unité distante par le bus de communication 14, notamment des ordres relatifs au courant de sortie souhaité,
- détermination des ordres d'ouverture/fermeture des commutateurs 2 à transmettre aux unités de pilotage 22 (signaux HS, LS), à partir des ordres relatifs au courant de sortie souhaité,
- vérification de la cohérence des informations reçues par le bus de communication 14,
- réalisation de diagnostiques relatifs au module, et/ou
- transmission d'un état complet du module à l'intention de l'unité distante, par l'intermédiaire du bus de communication 14.

En retour des ordres reçus, les moyens de pilotage 22 pourront être prévus aptes à délivrer des informations de diagnostique à l'unité de commande intrinsèque 13 (signal Fault).

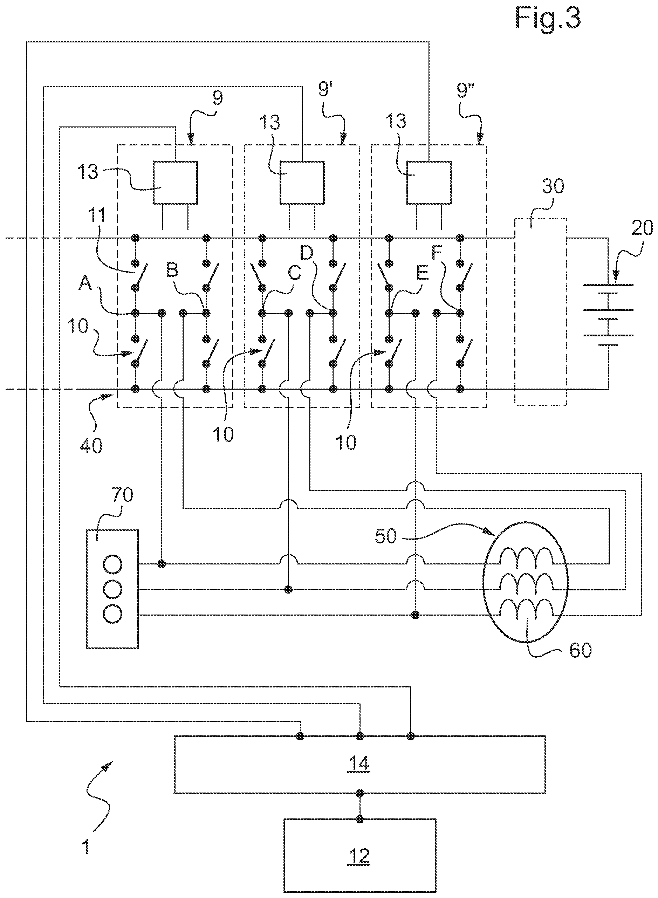

Comme illustré à la figure 3, l'invention concerne aussi un dispositif électrique combiné d'alimentation et de charge 1 comportant, dans l'exemple représenté, un accumulateur 20, un convertisseur de courant continu-continu 30, un onduleur 40, un moteur à courant alternatif 50 (ici triphasé et dont les enroulements 60 font office d'inductances), un bus de communication 14, une unité de commande distante 12 et enfin une connectique 70.

L'onduleur 40 comporte une pluralité de modules de puissance 9, 9' et 9" tels que décrit plus haut. Chaque module est muni d'une unité de commande intrinsèque 13 - ou local - et des moyens de commutation 10 sous la forme d'une structure de pont en H, un pont étant prévu par phase du moteur. Ce type de structure permet, notamment, une commande indépendante des phases du moteur qui n'auront donc pas à être connectées en étoile ou en triangle.

Chaque pont comporte quatre commutateurs pilotables 11. Ces commutateurs sont répartis sur des bras référencés de A à F, de la manière suivante :
- les bras A et B de l'unité 9 sont reliés à une première phase du moteur 50,
- les bras C et D de l'unité 9' sont reliés à une seconde phase, et
- les bras E et F de l'unité 9" sont reliés à la troisième phase.

Le dispositif 1 comporte également une connectique 70 permettant le raccordement à la prise du réseau électrique triphasé. Cette connectique 70 comporte des moyens de verrouillage, non représentés, pour empêcher l'accès à la prise électrique en cas de mise sous tension du dispositif 1 lors du mode de charge. La connectique 70 est également associée à des seconds moyens de verrouillage, non représentés dans les figures annexées, pour empêcher l'accès aux conducteurs (qui sont alors sous tension) lors du mode d'alimentation. La prise assure également une mise à la terre du dispositif 1.

Cette connectique 70 comporte avantageusement des protections et des filtres de compatibilité électromagnétique classiques pour tout appareil destiné à être relié au réseau électrique.

Le passage du mode d'alimentation au mode de charge est géré par l'unité de commande distante 12, qui pilote notamment les commutateurs 11 des bras A à F par l'intermédiaire du bus de communication 14 et des unités de commande intrinsèques 13. En mode alimentation, l'unité de commande distante 12 commande l'ensemble des bras A, B, C, D, E et F, ce qui permet de générer des courants triphasés de manière analogue à une commande standard. En mode charge, seuls les bras B, D et F sont commandés en réalisant, au moyen des inductances 60 du moteur 50 de la machine électrique, un élévateur de tension.

Plus précisément, et dans le présent exemple, l'unité de commande distante 12 pilote les commutateurs des bras A et F de la manière suivante :
- En mode d'alimentation, chacun des ponts en H est commandé de façon à permettre la circulation d'un courant alternatif dans la phase correspondante du moteur. Les courants alternatifs circulant dans les trois phases du moteur sont coordonnés de manière classique pour que le moteur tourne. Les commutateurs 11 des branches A et B peuvent être pilotés selon une commande PWM (acronyme anglo-saxon de « Pulse Width Modulation », soit en français «Modulation à Largeur d'Impulsions ») sinusoïdale classique. Les deux autres ponts en H sont pilotés de la même manière, mais en déphasage les uns des autres, de préférence à 120° dans le cas d'un moteur triphasé,
- En mode de charge triphasé, les deux commutateurs de chacun des bras A, C et E sont ouverts, tandis que les commutateurs des bras B, D et F sont pilotés selon une commande alternative classique pour un chargeur triphasé de sorte que chaque inductance 60 soit traversée par un courant alternatif et que la fonction PFC (acronyme anglo-saxon de «Power Factor Correction», soit en français « Correction de Facteur de Puissance ») soit réalisée sur l'ensemble des phases.

L'unité - ou circuit - de commande distante 12 peut également permettre un fonctionnement en mode dégradé du moteur 50. En effet, en cas de perte de phase suite à une défaillance du moteur 50 ou de l'onduleur 40, l'unité de commande 12 inverse la commande de l'une des deux phases du moteur 50 en fonctionnement. Cette commande permet de continuer à générer un champ tournant unique, d'amplitude constante, ne générant pas d'ondulation de couple, ce qui est impossible avec un dispositif triphasé classique dans lequel la perte d'une phase se traduit par des fortes perturbations du couple.

Comme déjà évoqué plus haut, le bus de communication 14 constitue une interface permettant d'interconnecter les différents éléments fonctionnels du dispositif 1, à savoir l'unité de commande distante 12 et les unités de commande intrinsèques 13 des modules de puissance 9, 9' et 9". Le bus 14 est muni à cet effet d'une pluralité de ports de communication, chaque port étant prévu pour recevoir une liaison avec l'unité distante 12 ou l'une des unités intrinsèques 13. Le bus 14 peut être un bus série ou parallèle, en fonction de sa fréquence et du nombre d'informations qu'il peut transmettre simultanément.

L'unité de commande distante 12 et l'unité de commande intrinsèque 13 échangent ainsi des informations sous la forme de données (par exemple sous la forme de bits), qui transitent via le bus 14. Cet échange se produit dans les deux sens, à savoir la transmission d'instructions de l'unité 12 vers les unités 13 et, en retour, la transmission d'informations de mesure et/ou de diagnostique des unités 13 vers l'unité 12.

Ces différents modules peuvent ainsi exercer alternativement un rôle de dispositif émetteur et un rôle de dispositif lecteur. Dans chaque cas, l'émetteur peut positionner au même instant tous les bits du bus correspondant à son port de communication. A un moment adéquat (déterminé par exemple par un signal de contrôle), le lecteur lit tous les bits en même temps.

L'unité de commande distante 12 est reliée à chaque unité de commande intrinsèque 13, via le bus de communication 14, avec barrière de potentiel, par exemple par interposition d'un opto-coupleur et/ou d'un transformateur.

Comme déjà indiqué, l'unité 13 comprend sa propre logique de programmation, indépendante de celle de l'unité 12. En particulier la logique de l'unité 13 permet d'exécuter elle-même les actions d'ouverture et de fermeture des commutateurs, ainsi que des actions de mesure et/ou de diagnostic.

De cette manière, l'unité de commande distante 12 transmet à travers la barrière de potentiel du bus 14 des instructions de haut niveau à chaque unité de commande intrinsèque 13, ces instructions se présentant sous la forme de signaux basse tension. A partir de ces instructions, chaque unité 13 exécute un programme apte à délivrer les signaux haute tension adéquats en vue de réaliser la commande exigée par l'unité 12. De même, en retour, l'unité 13 récupère les signaux de mesure haute tension, les transforme en signaux basse tension sous la forme de bits, puis les transmet à l'unité distante 12 via le bus 14 à travers la barrière de potentiel, l'unité 12 n'ayant dès lors plus qu'à procéder à l'analyse des informations directement fournies sous la forme de données.

Seuls des signaux basse tension transitent ainsi jusqu'à l'unité distante 12, ce qui permet d'économiser un nombre significatif de convertisseurs haute tension - basse tension par rapport aux solutions de l'état de l'art, le module de puissance prenant en charge de façon autonome les opérations haute tension.

Dans le présent mode de réalisation, la structure du convertisseur DC/DC 30 n'a pas été représentée afin de faciliter la lecture de la figure 2. La structure de ce convertisseur est en tout point analogue à celle de l'onduleur 40. Plus précisément, elle comporte trois modules de puissance (un par phase du moteur 50), ces modules étant eux-mêmes munis d'une cellule de commutateurs pilotables sous la forme d'une structure de pont en H, ainsi que d'une unité de commande intrinsèque. Chaque unité de commande intrinsèque relie, d'une part, les différents bras du pont en H et, d'autre part, un bus de communication.

De cette manière, le convertisseur DC/DC 30 constitue un composant miroir de l'onduleur 40. Ces deux éléments peuvent donc être fabriqués de la même façon, sous la forme d'une couche électronique dont la structure est identique. Afin de conférer à cette couche électronique la fonction « onduleur » ou « convertisseur DC/DC », il suffit de programmer les unités de commande intrinsèque de manière adéquate, postérieurement à la fabrication du composant. L'onduleur et le convertisseur peuvent ainsi être fabriqués de manière industrielle, pour une économie significative en termes de coûts de fabrication.

Dans ce cas, le bus de communication peut être le même que le bus 14 utilisé pour relier l'unité de commande distante 12 aux unités de l'onduleur, ou bien un bus de communication indépendant, spécifiquement dédié à la connexion entre ladite unité de commande distante 12 et les modules du convertisseur 30.

Lors de l'implémentation du dispositif 1 selon l'invention, il peut être notamment superposé une pluralité de couches, telles que :
- une première couche correspondant à l'onduleur 40,
- une seconde couche correspondant à l'unité de commande distante 12,
- une troisième couche correspondant au convertisseur DC/DC 30

De cette manière, l'on réalise une majeure partie du dispositif par simple superposition de couches électroniques, la connexion entre les couches « onduleur 40 » et « unité de commande distante 12 » étant assurée par un premier bus de communication, tandis que la connexion entre les couches « convertisseur DC/DC 30» et «unité de commande distante 12 » étant assurée par un second bus de communication.

Les modes de réalisation précédemment décrits de la présente invention sont donnés à titre d'exemples et ne sont nullement limitatifs. Il est entendu que l'homme du métier saura transposer ces exemples dans d'autres cas, par exemple lorsque l'on utilise des machines électriques à plus de trois phases. Il est également entendu que l'homme du métier saura adapter ces exemples au cas où l'onduleur n'a pas une structure de pont en H, mais une structure classique avec des ponts triphasés et des moyens de commutation de type contacteur de puissance pour passer d'un mode de charge des batteries à un mode d'alimentation du moteur.

## Revendications

1. Module de puissance (9,9',9") pour la conversion d'un courant électrique circulant entre un accumulateur (20) et un moteur (50) à courant alternatif, ledit module (9,9',9") comprenant des moyens de commutation (10), aptes à être commandés pour autoriser l'alimentation du moteur (50) et/ou la charge de l'accumulateur (20), et une unité de commande intrinsèque (13), reliée auxdits moyens (10) de commutation et apte à délivrer des signaux d'ouverture et/ou de fermeture auxdits moyens de commutation (10), ladite unité de commande intrinsèque étant en outre apte à échanger des données avec une unité de commande distante (12), cet échange de données mettant en oeuvre une barrière de potentiel.

2. Module selon la revendication 1 dans lequel les moyens (10) de commutation comprennent au moins un bras formé de deux commutateurs (11), montés en série, commandés à partir de ladite unité de commande intrinsèque (13).

3. Module selon la revendication 2 dans lequel les moyens (10) de commutation comprennent des moyens (22) de pilotage des commutateurs reliés, d'une part, à ladite unité de commande intrinsèque (13) et, d'autre part aux commutateurs, lesdits moyens (22) de pilotage étant aptes à fournir un courant de fermeture et/ou d'ouverture des commutateurs (11) à partir des signaux d'ouverture et/ou de fermeture de ladite unité de commande intrinsèque (13).

4. Module selon l'une quelconque des revendications 1 à 3 comprenant en outre des moyens de mesure (24) reliés à ladite unité de commande intrinsèque (13).

5. Module selon l'une quelconque des revendications 1 à 4 comprenant en outre des moyens d'alimentation (26), reliés au moins à ladite unité de commande intrinsèque (13) et/ou auxdits moyens de commutation (10).

6. Module selon l'une quelconque des revendications précédentes, dans lequel les moyens de commutation (10) sont agencés pour former une structure de pont en H, apte à être reliée à une phase (60) du moteur (50).

7. Module selon l'une quelconque des revendications précédentes, muni d'au moins une capacité de découplage (130) agencée pour protéger les moyens de commutation (10).

8. Module de puissance selon l'une quelconque des revendications précédentes comprenant en outre un bus de communication de données (14), relié à ladite unité de commande intrinsèque (13) et apte à échanger des données avec ladite unité de commande distante (12), avec barrière de potentiel sur le bus.

9. Module de puissance selon la revendication 8 comprenant des moyens d'isolation galvanique sur ledit bus de communication (14).

10. Module de puissance selon l'une des revendications précédentes, dans lequel l'unité de commande intrinsèque (13) assure une réalisation de diagnostiques relatifs au module (9,9',9").

11. Convertisseur de tension comprenant :
- au moins un module de puissance (9, 9', 9") selon l'une quelconque des revendications précédentes, et
- une unité de commande distante (12) configurée pour échanger des données avec l'unité de commande intrinsèque (13) du module (9, 9', 9") à travers une barrière de potentiel.

12. Convertisseur selon la revendication 11, comprenant une pluralité de modules de puissance (9, 9', 9") et une seule unité de commande distante (12) configurée pour échanger des données avec chaque unité de commande intrinsèque (13) à travers une seule barrière de potentiel,

13. Convertisseur selon la revendication 11 ou 12, étant un onduleur (40) pour l'alimentation et la charge combinées respectivement d'un accumulateur (20) et d'un moteur (50) à courant alternatif.

14. Onduleur selon la revendication 13, pour lequel le moteur (50) étant un moteur polyphasé, l'onduleur (40) est muni de modules de puissance (9,9',9") en nombre égal au nombre de phases (60) dudit moteur (50), chacun desdits modules de puissance (9,9',9") étant relié à l'une desdites phases (60) dudit moteur (50).

15. Convertisseur selon la revendication 11 ou 12, étant un convertisseur DC/DC (30) pour l'alimentation et la charge combinées respectivement d'un accumulateur (20) et d'un moteur (50) à courant alternatif.

16. Dispositif électrique (1) combiné d'alimentation et de charge, comportant un moteur (50) à courant alternatif, un accumulateur (20), un onduleur (40) muni d'au moins un module de puissance (9,9',9") selon l'une quelconque des revendications 1 à 10, ledit dispositif (1) comportant également une unité de commande distante (12), aptes à échanger des données avec l'unité de commande intrinsèque (13) du ou desdits modules de puissance (9,9',9").

## Patentansprüche

1. Leistungsmodul (9, 9', 9") für die Umwandlung eines elektrischen Stroms, der zwischen einem Akkumulator (20) und einem Wechselstrommotor (50) fließt, wobei das Modul (9, 9', 9") Schaltmittel (10) umfasst, die imstande sind, gesteuert zu werden, um die Versorgung des Motors (50) und/oder das Laden des Akkumulators (20) zu erlauben, und eine intrinsische Steuereinheit (13), die mit dem Schaltmitteln (10) verbunden ist und imstande, den Schaltmitteln (10) Öffnungs- und/oder Schließsignale bereitzustellen, wobei die intrinsische Steuereinheit ferner imstande ist, Daten mit einer entfernten Steuereinheit (12) auszutauschen, wobei dieser Datenaustausch eine Potentialbarriere nutzt.

2. Modul nach Anspruch 1, wobei die Schaltmittel (10) mindestens einen Arm umfassen, der von zwei in Reihe montierten Schaltern (11) gebildet ist, die auf der Basis der intrinsischen Steuereinheit (13) gesteuert werden.

3. Modul nach Anspruch 2, wobei die Schaltmittel (10) Steuermittel (22) der Schalter umfassen, die zum einen mit der intrinsischen Steuereinheit (13) und zum anderen mit den Schaltern verbunden sind, wobei die Steuermittel (22) imstande sind, einen Strom zum Schließen und/oder Öffnen der Schalter (11) auf der Basis von Öffnungs- und/oder Schließsignalen der intrinsischen Steuereinheit (13) bereitzustellen.

4. Modul nach einem der Ansprüche 1 bis 3, umfassend ferner Messmittel (24), die mit der intrinsischen Steuereinheit (13) verbunden sind.

5. Modul nach einem der Ansprüche 1 bis 4, umfassend ferner Versorgungsmittel (26), die mindestens mit der intrinsischen Steuereinheit (13) und/oder mit den Schaltmitteln (10) verbunden sind.

6. Modul nach einem der vorangehenden Ansprüche, wobei die Schaltmittel (10) ausgebildet sind, um eine H-förmige Brückenstruktur zu bilden, die imstande ist, mit einer Phase (60) des Motors (50) verbunden zu sein.

7. Modul nach einem der vorangehenden Ansprüche, ausgestattet mit mindestens einer Entkopplungskapazität (130), die ausgebildet ist, um die Schaltmittel (10) zu schützen.

8. Leistungsmodul nach einem der vorangehenden Ansprüche, umfassend ferner einen Datenkommunikationsbus (14), der mit der intrinsischen Steuereinheit (13) verbunden ist und imstande, Daten mit der entfernten Steuereinheit (12) auszutauschen, mit Potentialbarriere auf dem Bus.

9. Leistungsmodul nach Anspruch 8, umfassend Galvanikisolationsmittel auf dem Kommunikationsbus (14).

10. Leistungsmodul nach einem der vorangehenden Ansprüche, wobei die intrinsische Steuereinheit (13) eine Durchführung von Diagnosen sichert, die sich auf das Modul (9, 9', 9") beziehen.

11. Spannungskonverter, umfassend:
- mindestens ein Leistungsmodul (9, 9', 9") nach einem der vorangehenden Ansprüche, und
- eine entfernte Steuereinheit (12), die konfiguriert ist, um Daten mit der intrinsischen Steuereinheit (13) des Moduls (9, 9', 9") über eine Potentialbarriere auszutauschen.

12. Konverter nach Anspruch 11, umfassend eine Vielzahl von Leistungsmodulen (9, 9', 9") und eine einzige entfernte Steuereinheit (12), die konfiguriert ist, um Daten mit jeder intrinsischen Steuereinheit (13) über eine einzige Potentialbarriere auszutauschen.

13. Konverter nach Anspruch 11 oder 12, der ein Wechselrichter (40) für die kombinierte Versorgung und das Laden jeweils eines Akkumulators (20) und eines Wechselstrommotors (50) ist.

14. Wechselrichter nach Anspruch 13, wobei der Motor (50) ein mehrphasiger Motor ist, wobei der Wechselrichter (40) mit Leistungsmodulen (9, 9', 9") in gleicher Anzahl wie die Anzahl der Phasen (60) des Motors (50) ausgestattet ist, wobei jedes der Leistungsmodule (9, 9', 9") mit einer der Phasen (60) des Motors (50) verbunden ist.

15. Konverter nach Anspruch 11 oder 12, der ein DC/DC- Konverter (30) für die kombinierte Versorgung und das Laden jeweils eines Akkumulators (20) und eines Wechselstrommotors (50) ist.

16. Kombinierte elektrische Versorgungs- und Ladevorrichtung (1), aufweisend einen Wechselstrommotor (50), einen Akkumulator (20), einen Wechselrichter (40), der mit mindestens einem Leistungsmodul (9, 9', 9") nach einem der Ansprüche 1 bis 10 ausgestattet ist, wobei die Vorrichtung (1) ebenfalls eine entfernte Steuereinheit (12) aufweist, die imstande ist, Daten mit der intrinsischen Steuereinheit (13) des oder der Leistungsmodule (9, 9', 9") auszutauschen.

## Claims

1. Power module (9,9',9") for converting an electric current flowing between an accumulator (20) and an alternating-current motor (50), said module (9,9',9") comprising switching means (10), adapted to be controlled to authorise the powering of the motor (50) and/or the charging of the accumulator (20), and an intrinsic control unit (13), connected to said switching means (10) and adapted to deliver opening and/or closing signals to said switching means (10), said intrinsic control unit being further adapted to exchange data with a remote control unit (12), with this exchanging of data implementing a potential barrier.

2. Module according to claim 1 wherein the switching means (10) comprise at least one arm formed from two switches (11), mounted in series, controlled using said intrinsic control unit (13).

3. Module according to claim 2 wherein the switching means (10) comprise means (22) for controlling switches connected, on the one hand, to said intrinsic control unit (13) and, on the other hand to the switches, said means (22) of controlling being adapted to provide a closing and/or opening current of the switches (11) using opening and/or closing signals of said intrinsic control unit (13).

4. Module according to any of claims 1 to 3 further comprising means for measuring (24) connected to said intrinsic control unit (13).

5. Module according to any of claims 1 to 4 further comprising means for powering (26), connected at least to said intrinsic control unit (13) and/or to said switching means (10).

6. Module according to any of the preceding claims, wherein the switching means (10) are arranged to form an H-shaped bridge structure, adapted to be connected to a phase (60) of the motor (50).

7. Module according to any of the preceding claims, provided with at least one decoupling capacitor (130) arranged to protect the switching means (10).

8. Power module according to any of the preceding claims further comprising a data communication bus (14), connected to said intrinsic control unit (13) and adapted to exchange data with said remote control unit (12), with potential barrier on the bus.

9. Power module according to claim 8 comprising means of galvanic isolation on said communication bus (14).

10. Power module according to one of the preceding claims, wherein the intrinsic control unit (13) provides a conducting of diagnostic tests concerning the module (9,9',9").

11. Voltage converter comprising:
- at least one power module (9,9', 9") according to any of the preceding claims, and
- a remote control unit (12) configured to exchange data with the intrinsic control unit (13) of the module (9, 9', 9") through a potential barrier.

12. Converter according to claim 11, comprising a plurality of power modules (9, 9', 9") and a single remote control unit (12) configured to exchange data with each intrinsic control unit (13) through a single potential barrier.

13. Converter according to claim 11 or 12, being an inverter (40) for the combined powering and charging of an accumulator (20) and an alternating-current motor (50) respectively.

14. Inverter according to claim 13, for which the motor (50) being a polyphase motor, the inverter (40) is provided with power modules (9,9',9") in a number equal to the number of phases (60) of said motor (50), with each one of said power modules (9,9',9") being connected to one of said phases (60) of said motor (50).

15. Converter according to claim 11 or 12, being a DC/DC converter (30) for the combined powering and charging of an accumulator (20) and of an alternating-current motor (50) respectively.

16. Combined electric device (1) for powering and for charging, comprising an alternating-current motor (50), an accumulator (20), an inverter (40) provided with at least one power module (9,9',9") according to any of claims 1 to 10, said device (1) also comprising a remote control unit (12), adapted to exchange data with the intrinsic control unit (13) of said power module or modules (9,9',9").
